# EUROPEAN PATENT SPECIFICATION

(11) **EP 1 216 101 B1**
(45) Date of publication and mention of the grant of the patent: **02.05.2003**
(21) Application number: 00944203.9
(22) Date of filing: 19.07.2000
(51) Int. Cl.: B03B 9/06, B03B 5/40

(54) **SYSTEM FOR TREATMENT OF WASTE**
SYSTEM ZUR BEHANDLUNG VON ABFALL
SYSTEME DE TRAITEMENT DE DECHETS

(30) Priority: 01.10.1999 IL 13217399; 15.06.2000 US 594571
(43) Date of publication of application: 26.06.2002
(73) Proprietor: Arrow Ecology and Engineering Overseas (1999) Ltd., 31250 Haifa (IL)
(72) Inventor: ASA, Amir, 22426 Nahariya (IL); Feig, Israel, 38900 Caesarea (IL)
(74) Representative: Becker Kurig Straus
(86) International application number: IL0000422
(87) International publication number: WO01024936

(56) References cited:
- EP-A- 0 521 685
- DE-A- 2 628 612
- DE-A- 19 749 530
- DE-C- 19 507 703
- DE-C- 19 800 224
- US-A- 2 219 011
- US-A- 2 325 080
- US-A- 4 722 741

## Description

### FIELD OF THE INVENTION

The present invention concerns a system for the treatment of unsorted waste. The present invention further concerns apparatuses which may be used in such a system.

The unsorted waste dealt with by the present invention includes solid or semi-solid waste produced primarily in households, offices, etc. Such waste, in most cases is composed of solid waste resulting from human consumption. This includes, for example, food scraps, yard waste, organic materials and any other materials of widely varying physical characteristics such as fibrous material, e.g. paper, cardboard and rags, plastic material, glass, wires, light gauge metallic containers, and relatively heavy, materials such as heavy metal pipes and iron castings. Such waste will be referred to herein as "*municipal solid waste* " (MSW).

### BACKGROUND OF THE INVENTION

The treatment and/or disposal of MSW presents a major challenge in the urban setting. It has become particularly problematic in recent years as a result of growing population and an increase of per capita consumption. The treatment and/or disposal presents a continuously growing challenge to urban authorities.

Conventionally, MSW has been disposed of by such means as incineration, land fills or recycling. Recycling requires some discipline on behalf of the inhabitants in initially sorting the MSW into its major constituents, e.g. metal, glass, organic waste, etc., and disposing each type of waste in a different container.

Burial of MSW or disposal in land fills concentrates the MSW in a single location. Such a waste treatment method has various environmental undesired effects including risk to contamination of ground water, maleodors, attraction of various pests which thrive on the waste, and others.

Incineration presents a major problem of air pollution. In addition, it presents a problem of disposal of the produced ash particularly as it may contain relatively high concentration of non-combustible toxic substances such as toxic metals. The energy required for combustion is primarily used for the initial removal of the liquid from the waste and some separation of the waste to its components.

Recycling of certain waste materials is again problematic by current methods, as it requires separation of the material into its components, which as pointed about above, necessitates a measure of discipline from the inhabitant to separate waste material into its component. Experience shows that is never completely satisfactory.

U.S. Patent No. 1,298,577 discloses a system for separation of gold from sand using a device that allowed heavier gold to settle out of a moving water stream with the sand remaining suspended. U.S. Patent 5,548,971 disclosed the separation of rocks from wood chips by using an apparatus which subjected the mixture of wood chips and foreign particles, such as rocks and nails, to an upward flow of water. The employment of water floatation techniques for the separation of ingredients in MSW include U.S. Patent 3,568,839, U.S. Patent 3,597,308, U.S. Patent 3,897,215, U.S. Patent 4,250,023 U.S. Patent 5,387,267 and DE 195 07 703. These patents had the objective to yield a complete separation of organic material, including paper, textiles, wood, plastic and food waste from inorganic material such as metals, glass, sand and dirt in order to produce a low ash content fuel or compost material. Systems for treatment of collected waste are also described. For example, DE 19749530 describes a batch process for the treatment of waste including sand, stones, metal, glass as well as organic waste.

Systems for the biological treatment of organic material are also described. For example, US 4,722,741 describes an anaerobic digestion process yielding methane gas.

Nevertheless, none of the above referred to patents provide the separation of collected, unsorted waste and recycling of the waste components after their being separated.

### GENERAL DESCRIPTION OF THE INVENTION

The present invention provides, by its first aspect, a system for treatment of collected unsorted waste, comprising a waste receiving pit; at least one first separator for separating between first waste material having a specific gravity equal or less than that of water and second waste material having a specific gravity above that of water; at least one crusher for receiving said first waste material, substantially crushing at least a particulate portion thereof to a smaller particulate form to obtain treated waste material and producing a liquid product comprising water carrying the treated waste material; at least one acetogenic fermentor for receiving said liquid product and for anaerobic acetogenic fermentation thereof to produce a first fermented effluent; at least one methanogenic fermentor for receiving said first fermented effluent and for anaerobic methanogenic fermentation thereof to produce a second fermented effluent; at least one liquid feed line for feeding at least one of said first or said second effluent into one or more of the system's devices for subsystems.

The present invention further provides by other of its aspects, an apparatus for separation of collected unsorted waste, and an apparatus for treating a liquid which carries waste particles. These two apparatuses may be used, in the above system, in accordance with some preferred embodiments thereof.

The invention thus provides in accordance with a second aspect thereof, an apparatus for separation of collected unsorted waste, comprising a liquid-holding receptacle with an open top for receiving the waste and a bottom end formed with a sink portion for receiving a first waste material having a specific gravity larger than that of water; a first conveyor with its bottom end within said sink portion and its top end extending out of the receptacle to convey the first waste material from said sink portion to a first collecting device outside said receptacle, and a second conveyor with its bottom end at another portion of the receptacle being at a level higher than that of said sink portion to convey a second waste material having a specific gravity below that of water, to a second collecting device; a barrier-defining member situated above said first conveyor at a clearance therefrom permitting delivery of the said first waste material by said first conveyor and defining a barrier for articles introduced into the receptacle from directly contacting said first conveyor but in said sink portion; liquid injection nozzles disposed within said receptacle for injection of liquid streams into the liquid within the receptacle to impart lateral movement onto articles within said liquid.

According to a preferred embodiment of said second aspect, the apparatus comprises a shredding device for shredding solid matter dispersed within said liquid. The shredding device may have the general form of a rotating cylinder with arcuated blades for cutting or shredding the solid matter as a result of its rotation. This arrangement is particularly important for the purpose of shredding plastic material such as plastic bags, disposable diapers, which are one of the characteristics and which present a major disposal problem of household waste. The shredding device can also facilitate rupture of closed plastic bags.

The present invention thus provides in accordance with a third aspect thereof, an apparatus for treating a liquid carrying waste material, comprising a tubular body defining a flow path between a liquid inlet and a liquid outlet, the tubular body having a plurality of straight sections, two adjacent sections, consisting of a proximal section being the one more proximal in the flow path to the inlet and a distal section, being connected to one another at ends thereof to form corners with angles between them, at their point of contact; and high pressure liquid nozzles disposed within the tubular body at said corners thereof and arranged such that they inject an axial jet of pressurized liquid into the distal section.

In the current disclosure, above and below, the terms *"collected waste", "MSW", "household- derived waste", "Municipal unsorted-solid waste"* and other similar terms or derivation thereof, may be used interchangeably. The present invention is useful for the treatment of waste of a variety of different sources. It should be noted that the exact constituent of the MSW may change from one locality to another, depending on whether it is derived from a residential area, from an office area; etc. from one to another; seasonably; independent to the climate, etc. It is a characterizing feature of the invention that initial separation of the waste to its components is not required. Furthermore, in accordance with the invention, the various components are collected separately and may subsequently be recycled.

The system, in accordance with one embodiment thereof comprises a sorter subsystem for receiving said second waste material and for sorting it according to predefined characteristics. This sorter subsystem may employ sorting apparatuses of a kind generally *known per se.* In accordance with a preferred embodiment, the sorter subsystem is connected to at least one liquid feed lines for rinsing the sorted waste material and thus consequently, a rinsed separated material ready for re-cycling is obtained. Such material may include glass, ferrous and non-ferrous metals. Ferrous metal and non-ferrous metal may be separated from one another based on the magnetic properties of the ferrous metal.

In accordance with one preferred embodiment of the system, the first separator is an apparatus according to the second aspect of the invention.

In the separator, the barrier-defining member according to the second aspect of the invention, is preferably a planar and situated essentially parallel to said conveyor. The nozzles may, in accordance with one embodiment be disposed or formed at the upper wall of said barrier-defining member. The barrier-defining member typically extends between side walls of the receptacle situated opposite one another on both sides of the first conveyor.

Typically, said second waste material is fed first into one or more devices which subjects the waste to an initial treatment by grinding, shredding or both, and only then this treated waste product is fed into the crusher.

In accordance with another preferred embodiment, the system comprises a filtration-separation subsystem for receiving the liquid waste material and separating particulate material therefrom with a particle size above a predefined size. Further in accordance with this preferred embodiment, the system typically comprises a feed line for feeding the separated particulate material back into the crusher with another feed line, for feeding the separated liquid, typically collected in a filtered liquid reservoir to the acetogenic fermentor.

In accordance with one preferred embodiment, the crusher in the system is the hydro-crusher apparatus according to the third aspect of the invention. The nozzles in this hydro crusher are typically connected and receive high liquid pressure from a high pressure pump which pumps liquid from the filtered liquid reservoir which contains a liquid separated by filtration and separation subsystem.

The filtration and separation subsystem, in accordance with this preferred embodiment of the invention, comprises three devices as follows: a first, filtration and separation device, for receiving the liquid product containing the liquid waste, filtering out therefrom particulate material of a size above a predefined size and for separating a sediment-containing fraction from the filtered liquid, to obtain a first filtered liquid; a second, separation device for receiving said sediment-containing fraction, separating between the sediment and the liquid to obtain a second filtered liquid; and a third, filtration device for receiving said first and second filtered liquid, filtering out particulate material therefrom of a size larger of the predefined size, to form a filtered liquid reservoir and a particulate material-containing fraction. In accordance with this embodiment, the system preferably comprises also a feed line for feeding said particulate material-containing fraction back into said crusher.

The tubular body of the apparatus in accordance with the third aspect, typically forms a prismatic-shaped spiral. The spiral is preferably right-angled. The apparatus in accordance with this aspect is typically associated with a first treatment device for a pretreatment of the liquid to grind or shred the particulate material therein; and at times also with a second treatment device which is connected to the outlet of said tubular body for removing articles of defined characteristics from the liquid exiting from said outlet, e.g. the above defined filtration and separation subsystem. The second device, as is clearly elucidated from the description of the system above, is typically connected to the inlet of the apparatus to transfer thereto at least a portion of the separated articles for re-treatment.

Other preferred embodiments of the system will be elucidated from the detailed description of the invention below.

The invention will now be illustrated further in the following description of specific, non-limiting embodiments.

### BRIEF DESCRIPTION OF THE DRAWINGS

In order to understand the invention and to see how it may be carried out in practice, a preferred embodiment will now be described, by way of non-limiting example only, with reference to the accompanying drawings, in which:
**Fig. 1** shows an overall, schematic view of a system in accordance with the first aspect of the invention.
**Fig. 2** shows a block diagram of the system illustrating the direction of transfer of material in the system as well as the feed line of the recycled rinsing liquid.
**Fig. 3** illustrates an apparatus in accordance with the second aspect of the invention, with the side walls removed for the purpose of better illustration.
**Fig. 4** shows a longitudinal cross-section of the apparatus illustrated in Fig. 3.
**Fig. 5** shows one embodiment of a portion of the sorting subsystem of the system shown in Fig. 1.
**Fig. 6** shows an enlargement of a portion of the system shown in Fig. 1, illustrating the crusher and the filtration-separation subsystem.
**Fig. 7** shows a partial isometric view of the spiraling tube of the hydro crusher which is in accordance with the third aspect of the invention.
**Fig. 8A** shows an enlarged comer section of the crusher showing a tube and the spraying nozzle.
**Fig. 8B** shows a horizontal cross-section through one spiral turn of the tubular body of the hydro-crusher.
**Fig. 9A** is a longitudinal cross-section of the first, filtration separation device in the filtration-separation subsystem of Fig. 6.
**Fig. 9B** is a cross-section through lines B-B in Fig. 9A.
**Fig. 10A** is a longitudinal cross-sections through the second separation device of the subsystem shown in Fig. 6.
**Fig. 10B** is an upper view of the second separation device subsystem shown in Fig. 6.
**Fig. 11** is a longitudinal cross-section through the third, filtration device of the subsystem shown in Fig. 6.

### DETAILED DESCRIPTION OF A PREFERRED EMBODIMENT

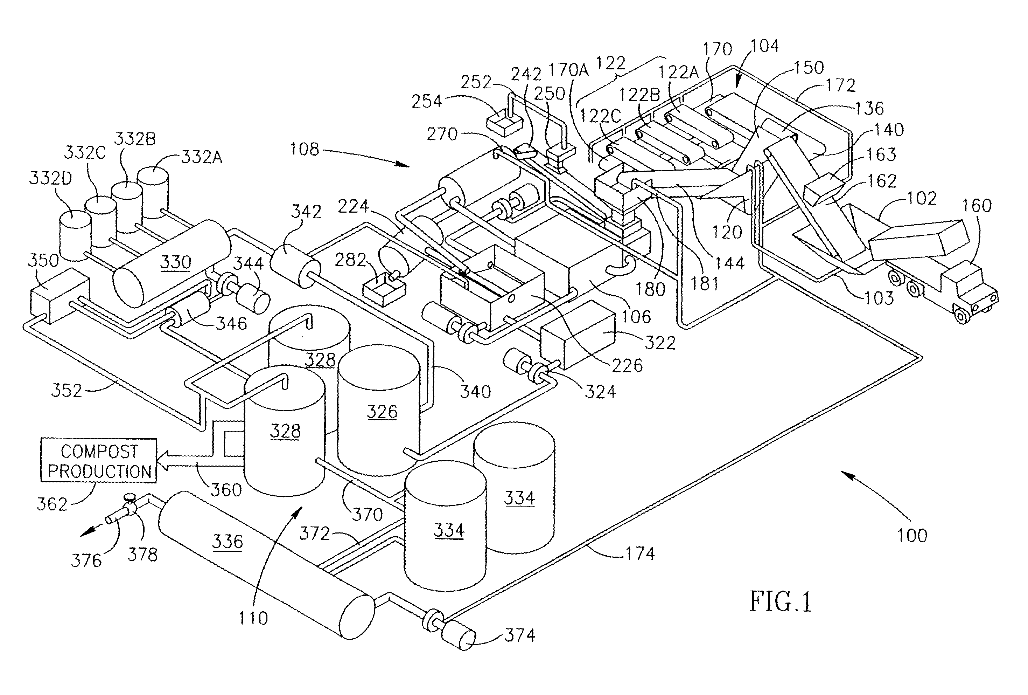

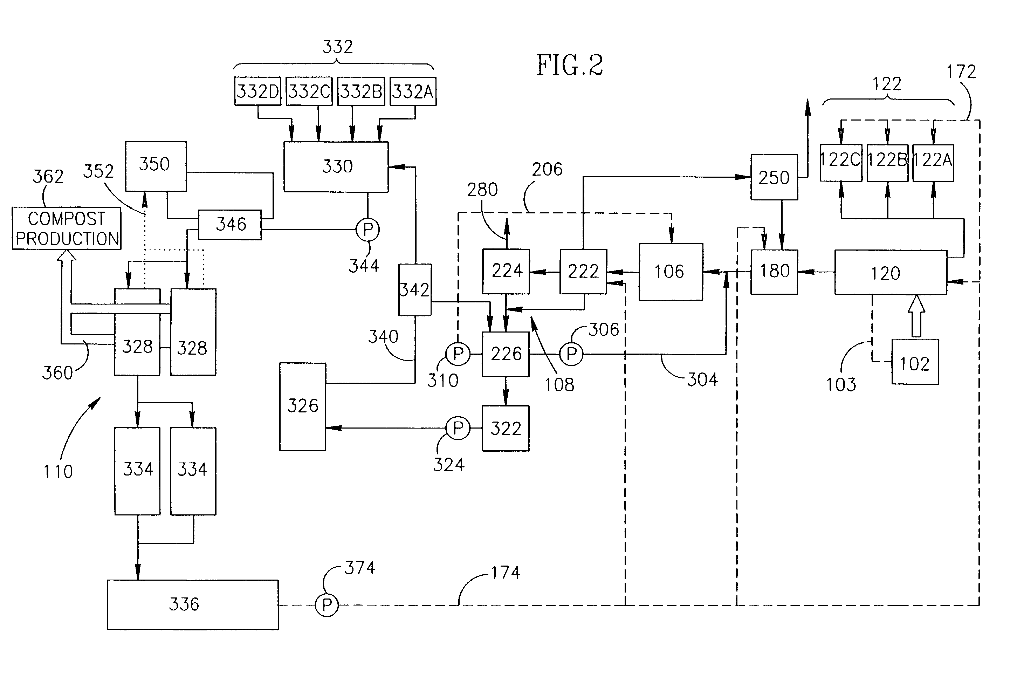

Reference is first being made to Figs. 1 and 2, illustrating a system generally designated **100** in accordance with the first aspect of the invention. The system **100** comprises a waste receiving pit **102,** a separator **104,** a crusher **106,** a filtration and separation subsystem **108** and a liquid fermentation subsystem **110,** comprising one or more acetogenic fermentors **326,** methanogenic fermentors **328** and aerobic fermentors **334.**

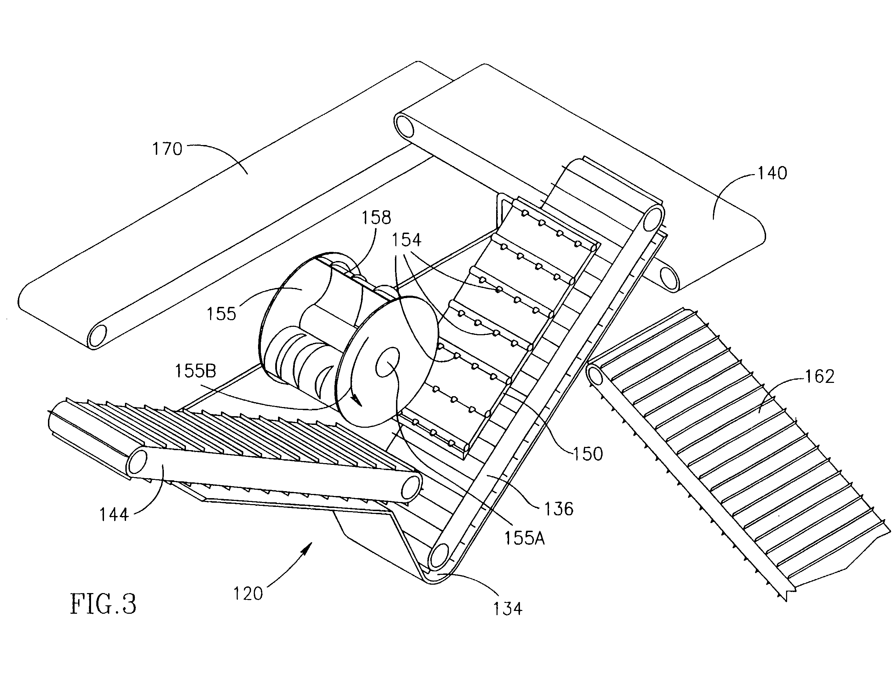

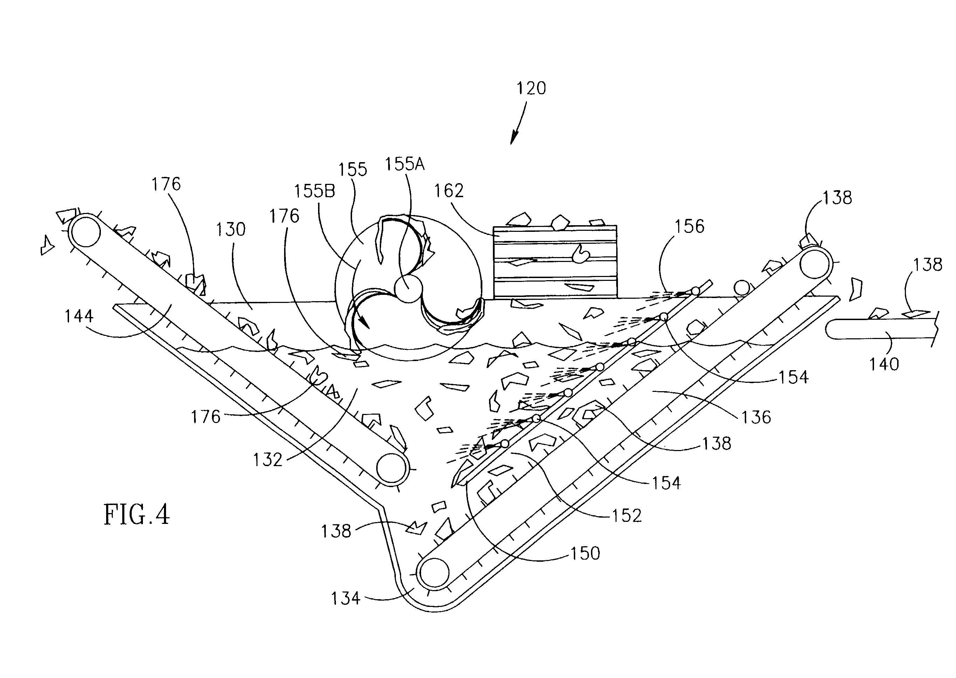

First separation subsystem **104** comprises a separation apparatus **120** shown in more detail in Figs. 3 and 4 and a sorting subsystem **122.** Apparatus **120,** as can best be seen in Figs. 3 and 4 has a water holding receptacle **130** holding a liquid **132** which has generally inverted para-metal shape with a sink portion **134.** Disposed within receptacle **130** are two conveyors, consisting of a first conveyor **136** having its bottom end within the sink portion **134** and its top end extending out at one end of receptacle **130.** Conveyor **136** conveys articles **138** (first waste material) which sink to sink portion **134** out of the receptacle and when reaching the top end of said first conveyor such articles drop onto conveyor belt **140** which transports the articles to sorter subsystem **122.**

Receptacle **130** holds a second conveyor **144** the bottom end of which is at a level higher than that of said sink portion **134.**

Apparatus **120** further comprises a barrier defining member **150,** which in this specific embodiment is an essentially planar member (plate) situated parallel to conveyor **136** defining a clearance **152** sufficient to permit delivery of articles **138** by conveyor **136.** Plate **150** typically extends between and supported by the side walls of receptacle **130.**

Incorporated in member **150** are a plurality of liquid injection nozzles **154** which continuously or intermittently introduce pressurized streams of liquid **156** into the liquid within the receptacle. The incorporation of the nozzles into the barrier defining member **150** is but an example and a similar effect, as will be explained below, can also be achieved by disposing such injection nozzles in other portions of the apparatus, e.g. in the side walls of apparatus **120**.

As can be seen in Figs. 3 and 4, separation apparatus **120** comprises also an optional shredding device **155** having a general cylindrical form and rotatable about axis **155A** in the direction represented by arrow **155B.** Device **155** comprises several (three in this specific embodiment) of arcuated blades **158**. When the blades impact solid matter in liquid **132,** such a solid matter, e.g. plastic bags, diapers, particulate organic matter, etc., is cut and reduced to a smaller size.

MSW brought in by a truck **160** is emptied into a receiving pit **102** and then conveyed therefrom by means of conveyor **162** into receptacle **130**. Liquid accumulated at the bottom of receiving pit **102** is pumped by means of a pump (not shown) through a pipe **103** into receptacle **130**. Preferably, prior to entry into the receptacle **130** of apparatus **120,** the waste is subjected to a preliminary treatment by rupturing apparatus **163,** which ruptures the plastic bags included in the MSW. As will be appreciated there may be a variety of other rupturing means for rupturing and opening the bags such as the optional shredding device **155** seen in Figs. 3 and 4. It should be noted however that in accordance with some embodiments of the invention it is possible also to design the system such that MSW delivered by truck **160** will be emptied directly into receptacle **130,** which in this case serves also as the receiving pit.

When the MSW (typically after rupturing the bags) enters receptacle **130,** it mixes with liquid, e.g. re-cycled water, while waste articles having a specific gravity larger than water sink (the first waste material) to the bottom and collect in sink portion **134** while articles having a specific gravity lighter than that of water remain at the upper levels of liquid **132**. The liquid sprayed out of injection nozzles **154**, which as will be explained below is recycled water extracted from the waste and which is one of the products of the system, continuously replenishes liquid **132** and further creates turbulence within liquid **132** to drive the lighter articles towards conveyor **144.** Thus, in this manner, heavier articles (namely those having a specific gravity larger than that of water) sink to sink portion **134** and then transported by conveyor **136** to eventually drop onto conveyor belt **140** and lighter waste articles are conveyed upward by conveyor **144** and subsequently treated as will be explained further below.

The heavier waste material received onto belt **140** is transported thereby onto sorter **122**, which comprises a conveyor belt **170** that transports the waste material through a plurality of separation stations, three in this specific example **122A**, **122B** and **122C**. When passing through each of these stations, specific waste articles are removed into the different stations based on their different characteristics. For example, solids comprised of a magnetic ferrous metal may be removed by means of a magnetic belt pulling waste material away from belt **170**. The sorting of waste into different components generally is known *per se* (see for example U.S. Patent Nos. 5,387,267 and 5,341,935). In addition, in accordance with a preferred embodiment of the invention, in each of these stations, the separated waste material is rinsed by recycled water fed through liquid feed line **172** which is branched from the major rinsing liquid feed line **174**. The separated waste material may then be collected in different receptacles (not shown in Fig. 1). Remaining unsorted waste material on belt **170**, will reach the end **170A** of the belt and then fall into a further receptacle positioned there (not shown).

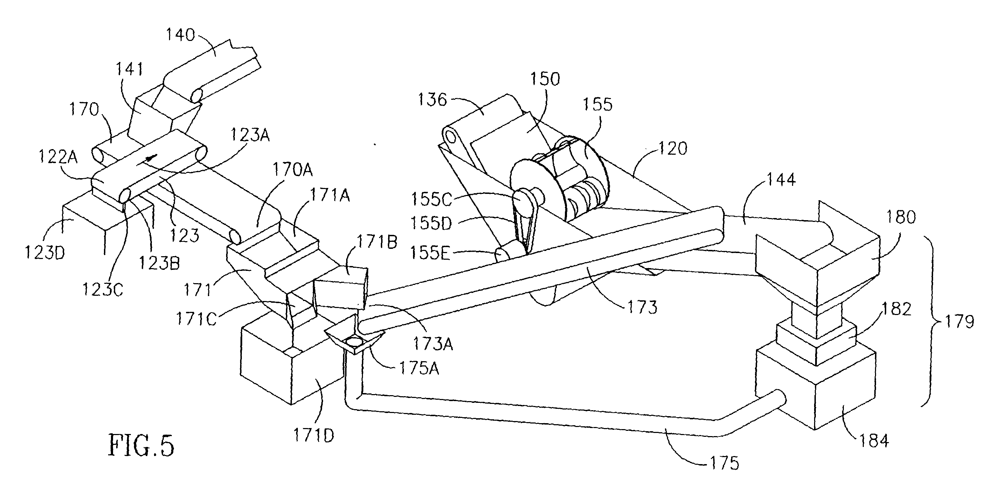

A specific embodiment of the waste separation system **122** can be seen in Fig. 5 (viewed from an essentially opposite angle as the view point in Fig. 1).

Conveyor belt **140** feeds the initially unsorted solid waste into a funnel device **141** which then feeds the unsorted waste onto belt **170**. Station **122A** consists of a belt **123**, placed above belt **170** and which may, according to one embodiment, be made of a magnetic material thereby drawing ferrous magnetic material out of the unsorted waste conveyed by belt **170**. Belt **123** rotates in the direction of arrow **123A**, and drawn magnetic waste attached to the bottom part of belt **123** disattaches at the end **123B** of the belt **123** by a scraping action of barrier **123C** (held by a separate supporting structure not shown), This waste then falls into waste receptacle **123D**.

Unsorted waste reaching the end **170A** of conveyor belt **170** is fed into a conduit device **171** having a top opening **171A** adjacent end **170A** of belt **170** and having two openings **171B** and **171C**. Under general condition of operation, outlet **171C** will be closed, with all material exiting through outlet **171B** into conveyor belt **173** which conveys the unsorted waste material back into conveyor **144**. Opening **171B** is situated close to end **173A** of belt **173** and consequently the liquid exiting through opening **171B** as well as small particulate matter fall down into funneled opening **175A** of pipe **175** which leads this material directly into receptacle **184**.

Occasionally, opening **171B** may be closed and opening **171C** opened whereby the unsorted waste material is collected in receptacle **171D**.

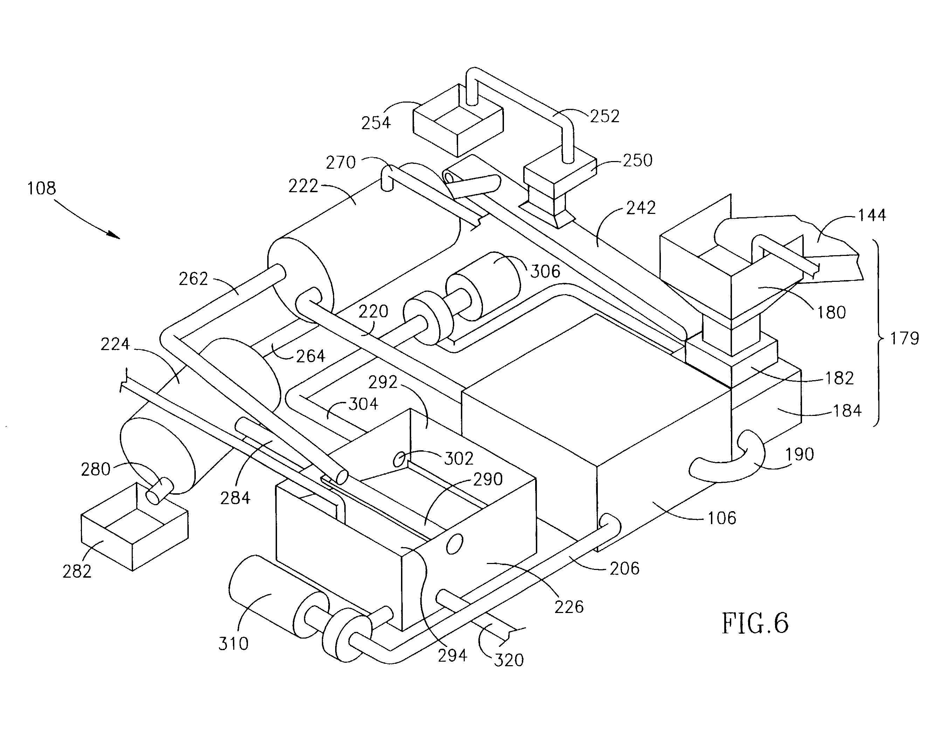

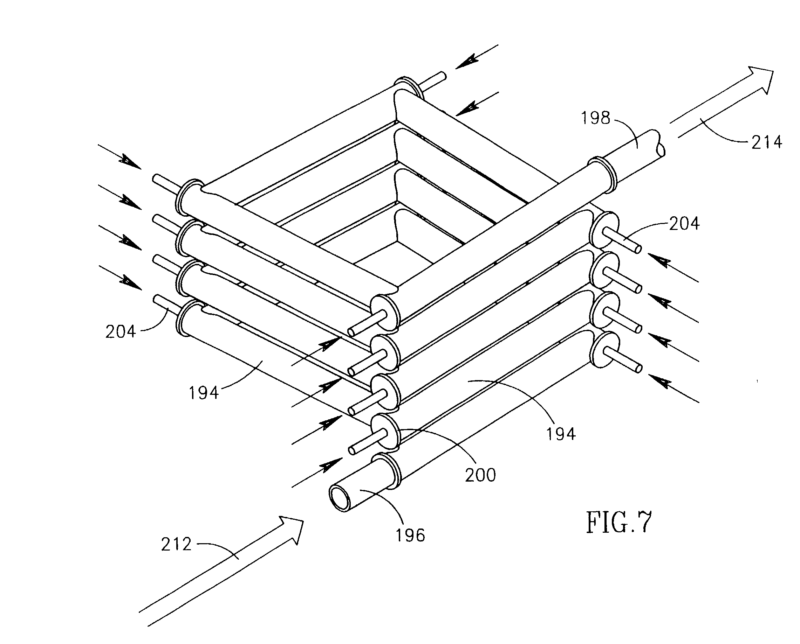

Lighter waste articles **176** (the second waste material) which include primarily biodegradable organic material, such as food remains (e.g. vegetables, fruit, meat, etc.), paper product, wood pulp, cardboard, etc., as well as non-degradable organic material such as plastic material and others, drop from the upper end of conveyor **144** into a pre-treatment in sub-system **179** for shredding, grinding/graining or both of the waste material. Subsequently the waste material is fed into crusher **106** and then is further treated in separation filtration subsystem **108**, all of which can be more clearly seen in Fig. 6 with some components being further detailed in Figs. 7-11.

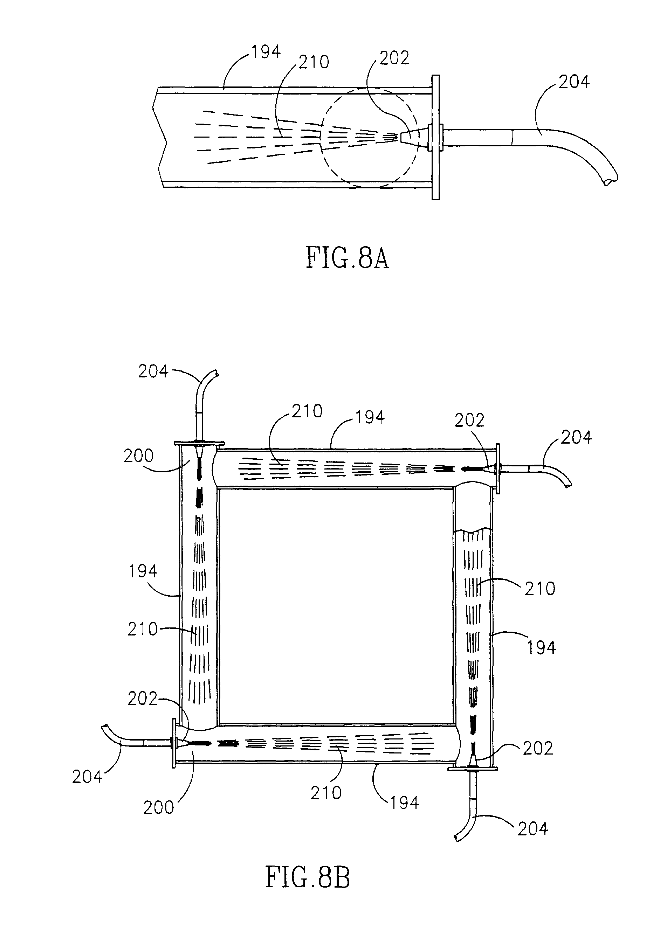

Sub-system **179** typically consists of a shredder device **180** and a grainer or grinder device **182**, with the former being above the latter. The waste material in such a sub-system is first shredded to reduce the size of its particles and then treated to form some of its components, particularly the non-biodegradable components, mainly plastic, into grains to allow better subsequent separation thereof from the bio-degradable waste (after treatment in crusher **106** - see below). After treatment in sub-system **179,** the waste material mixed with liquid, some of which coming with the waste from apparatus **120,** and some of which being optionally supplemented by a liquid coming from tube **181,** is then fed into receptacle **184** from where this liquid-mix initially treated waste is fed through feeding pipe **190** into crusher **106,** the operation of which according to a specific embodiment of the invention, will be explained with reference to Figs. 7, 8A and 8B.

Hydro crusher **106** consists of a plurality of straight tube sections **194** defining together a flow path between liquid inlet **196** and liquid outlet **198**. Each two tube sections **194** are connected to one another at ends thereof to form corners **200**. In addition, each two connecting tube sections **194** consisting of one tube section which is more proximal, with respect to the flow path, to inlet **196** and a distal one. Disposed in each comer **200** is a liquid injection nozzle **202** which feeds the tube with pressurized liquid from tube **204,** which is again connected through one or more manifold arrangements (not shown) to high pressure feed line **206** (see Fig. 6) which will be referred to again further below. The injection nozzles are arranged such that they inject a jet **210** of pressurized liquid from the proximal corner towards the distal one of two connecting tubes. In this way, waste material introduced to the hydro crusher through inlet **196,** as represented in Fig. 7 by means of arrow **212,** is propelled within the flow path by means of these high pressure liquid jets until exiting out from outlet **198,** represented by means of arrow **214**. These high liquid jets, in addition to propelling the waste, also has the effect of crushing the degradable organic material within the MSW (waste, food particles, paper, cardboard, etc.).

In this specific embodiment, the different tube sections **194** connect to one another at a right angle and form together a rectangular spiral arrangement. One should note that this is an example only and other arrangements may also be envisaged. For example, rather than a rectangular spiral arrangement, the different sections may be arranged to form a triangular, hexagonal or octagonal spiral arrangement. In addition, any arrangement of a plurality of tube sections connected to one another to form corners and having high liquid jets disposed such that they inject a high pressure liquid spray axially into a distal tube, may be employed as the hydro crusher in the system of the invention, which also forms an independent aspect as noted above.

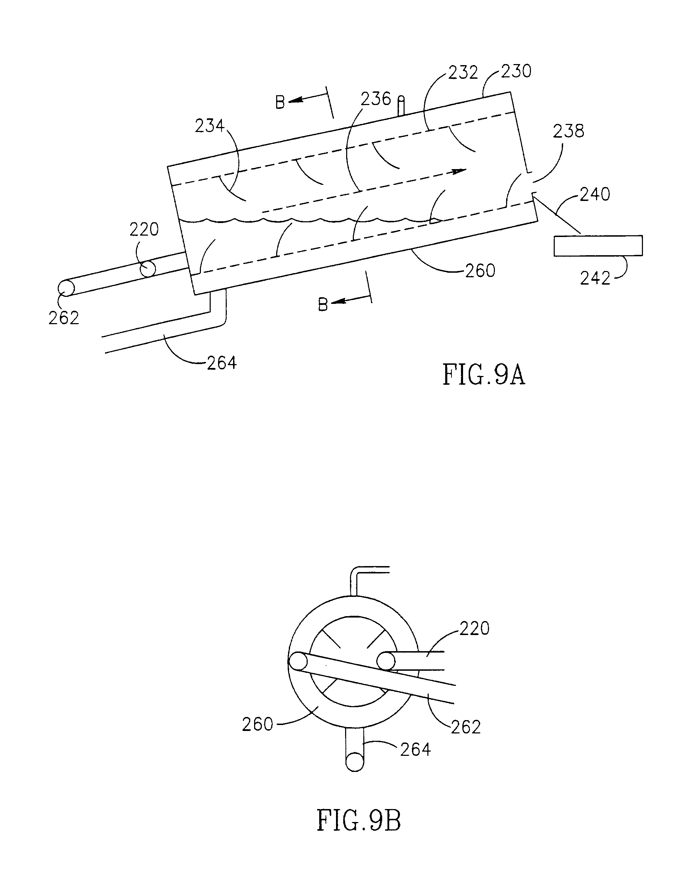

The treated waste material flowing out of hydro-crusher **106**, is fed through tube **220** into a filtration and separation subsystem **108** consisting of a first, filtration separation device **222**, a second, separation device **224** and a third, filtration device **226**. Device **222**, which can be seen in a longitudinal and transverse cross-sections in Figs. 9A and 9B, respectively according to which device **222** has an external cylindrical body **230** and an internal rotating cylindrical member **232**. The walls of member **232** may be perforated to form a sieve or may be in the form of a net. The openings in the walls of member **232** are of a predefined mesh to allow passage therethrough of only particles of predefined size. The liquid carrying the treated waste material flows through pipe **220** and enters the lumen defined by member **232**. Member **232** has a spiral blade **234** and the entire member is continuously rotated, by means of a motor (not shown). Consequently, particulate matter larger than the mesh in the walls of member **232** are propelled upwards, as represented by broken line arrow **236**, to eventually exit through opening **238** and to slide over slide **240** onto conveyor belt **242**.

The mesh of the walls of member **232** is made such so that most particles remaining in the liquid coming out of hydro crusher **106** will filter through the walls and thus only large particles will remain in the lumen. These particles include primarily non crushable, non degradable material such as a plastic bag, bottles, etc.

This non filtered material received on conveyor **242** is transported, as can be seen in Fig. 1, to an air suction device **250** which sucks up all light material, including primarily plastic articles and particles that are then blown through tube **252** into receptacle **254**. The matter received on conveyor **242** may include some non crushed material other than plastic which was not sufficiently crushed in the crusher and this is further transported by conveyor **242** back into receptacle **184** for a further treatment cycle through hydro crusher **106.**

The filtered liquid is flown from the peripheral annular portion **260** defined between walls **230** and member **232** out through tube **262** into filtration device **226.**

The annular portion **260** further opens at its lower bottom end to tube **264** which feeds sediments, including sand, small stones, etc., into separation device **224.**

As can further be seen, device **222** receives rinsing liquid through feed line **270** which branches from major rinsing feed line **174.** This rinses the article transported upwards to the outlet **238,** whereby the collected plastic material in receptacle **254** is substantially rinsed.

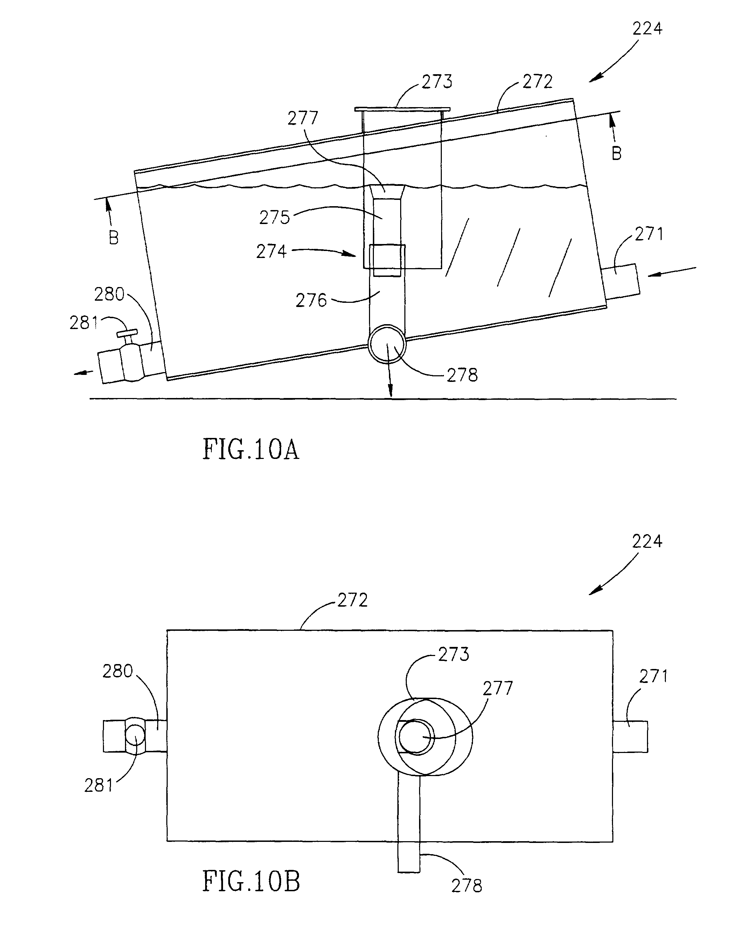

Separation device **224** serves mainly for separation of sediments, primarily sand and stones, from the waste material. This device, seen in cross-section and upper view in Figs. 10A-10B, has a cylindrical body **272** with an opening on top **273** with a liquid inlet **271** connected to tube **264** and an outlet **280** fitted with a valve **281.** Further included within separation device **224** is a telescopic tube member **274** consisting of two telescopically connected tube members **275** and **276** leading from a top opening **277** to a liquid outlet **278.** Liquid entering through inlet **271** accumulates within separation device **224** up to the level of opening **277** and non-soluble sediment material such as stones or sand then sinks to the bottom which can periodically be emptied through outlet **280** into receptacle **282** (see Figs. 1 and 6). The level of liquid within body **272** can be controlled by displacement of tube *vis a vis* member **275** tube member **276.** Liquid outlet **278** is connected to tube **284** connecting device **224** with device **226.**

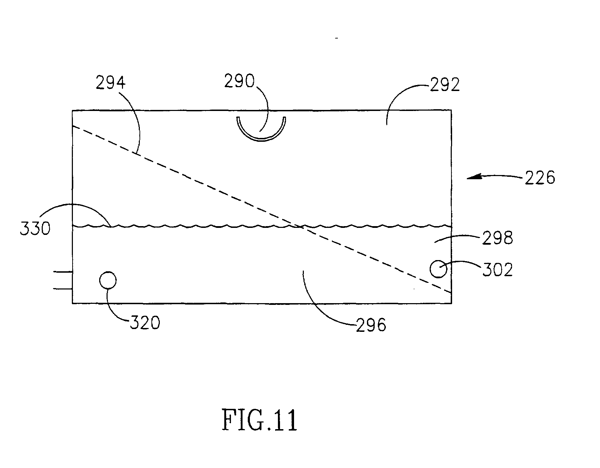

Tube **284** of device **224,** feeds into a trough-like member **290** of device **226,** with the trough-structure being best seen in the cross-sectional view of Fig. 11. Trough member **290** serves as another catch for sand or other small sediments which may remain in the treated liquid coming from device **224**.

Filtration device **226** consists of a basin **292** separated by a diagonal filter screen **294** into a filtered and non filtered portion **296** and **298**, respectively. The liquid **300** collected in basin **292** has a part which is within portion **296**, the latter being substantially filtered, and a non-filtered part contained within portion **298**. The filtered portion forms a filtered liquid reservoir. Part of the non filtered liquid, with particulate matter contained therein, flows out through outlet **302**, through tube **304**, and propelled by pump **306**, into receptacle **184** for further recycling within hydro crusher **106**.

Pump **310** draws rinsing liquid from the filtered liquid reservoir and feeds the high pressured liquid through tube **206** into hydro crusher **106** which serves then to feed the injection nozzles as described above. In this way, the entire liquid which is used for crushing in the hydro crusher is recycled.

Excess filtered liquid is then pumped through tube **320** into buffer reservoir **322**, by means of pump **324** and from there into the acetogenic fermentation tank **326** which is part of the biological reactor subsystem **110**.

Subsystem **110** consists in addition to one or more acetogenic and methanogenic fermentors **326** and **328**, respectively (according to this specific embodiment one acetogenic and two methanogenic fermentors), two in this specific embodiment, a mixing container **330** connected to one or more additive containers **332**, three in this specific embodiment (**332A**, **332B** and **332C**), one or more final aerobic fermentors **334**, two in this specific embodiment, and effluent water reservoir **336**. Subsystem **110** further comprises a feed line **340,** for feeding the liquid from fermentor **326** into tank **330**. Disposed in feed line **340** is a filter device **342** which filters out particles remaining in this liquid and feeds them back into device **226**. The flow of liquid through feed line **340** is propelled by means of pump **344** which then propels the liquid, through heat exchanger **346** into the methanogenic fermentor **328**. The heat exchanger receives heat generated by means of generator **350.** Generator **350** is fed methane produced in the methanogenic fermentors **328** which flows through biogas line **352** into generator **350**. Additives from tanks **332A, 332B, 332C** and **332D** are controllably continuously fed into tank **330** and mixed with the liquid which then flows into the methanogenic fermentor **328**. These additives include, for example, NaOH and/or other basic chemicals for pH control, citric acid and/or other acidic chemicals for pH control as well, trace element solutions, as well as acclimated wild-type microorganismal flora.

The fermentation in the methanogenic fermentor yields also production of organic material, consisting primarily of dead bacterial cells, which accumulates at the bottom of the container. This organic material is periodically collected, as represented by arrows **360** into a compost production unit, **362,** as generally known *per se*.

Liquid produced in fermentor **328** is then drawn, by means of a pump (not shown) through pipes **370** into aerobic fermentors **334** for final water purification treatment. The obtained water effluent can then be collected, through pipes **372** in effluent reservoir **336**. Effluent reservoir serves for rinsing liquid which is fed by pump **374** into main rinsing liquid feed line **174** from where it branches to the various locations including the nozzles in the separator device **120,** rinsing nozzles in sorter units **122A-C,** into the shredding and grinding unit **180,** etc. Excess affluent may then be drawn through outlet **376,** controlled by valve **378** for irrigation or the like.

As will readily be appreciated by the artisan, the above described specific embodiments are intended for illustrative purposes only of the much wider scope of the invention as defined above. As will further be appreciated, many routine modifications of these embodiments, as well as a large amount of other embodiments are possible and within the reach of an artisan applying ordinary skills in the art, within the general scope of the invention as defined herein.

## Claims

1. A system (100) for treatment of unsorted collected waste, comprising
a waste receiving pit (102);
at least one first separator (104) for separating between the received waste first waste material (176) having a specific gravity equal or less than that of water and second waste material (138) having a specific gravity above that of water and removing the waste material;
at least one crusher (106) for receiving said first waste material (176), substantially crushing at least a particulate portion thereof to a smaller particulate form to obtain treated waste material and producing a liquid product comprising water carrying the treated waste material;
at least one acetogenic fermentor (326) for receiving said liquid product and for anaerobic acetogenic fermentation thereof to produce a first fermented effluent;
at least one methanogenic fermentor (328) for receiving said first fermented effluent and for anaerobic methanogenic fermentation thereof to produce a second fermented effluent; **characterized in that**
the system comprises at least one liquid feed line (174) for feeding at least one of said first or said second effluent into one or more of the system's devices or subsystems including at least one of said first separator (104) and said crusher (106), the effluent fed through the liquid feed line providing all needed aqueous liquid for said one or more of the system's devices or subsystems; and wherein said first (176) and said second waste material (133) are continuously separated and removed from the first separator (104) for continuous further processing by the system's devices and subsystems.

2. A system according to Claim 1, wherein at least one liquid feed line (172) is for feeding at least one of said first or said second effluent into said first separator (104) and said crusher (106), the effluent fed through the liquid feed line providing all need aqueous liquid for said first separator (104) and said crusher (106) and wherein said first (176) and said second (138) waste material are continuously separated and removed from the first separator (104) for continuous further processing by said crusher (106).

3. A system according to Claim 1, wherein said at least one liquid feed line (174) is for feeding at least one of said first or said second effluent into all the system's devices or subsystems and wherein said first (176) and said second waste material (138) are continuously separated and removed from the first separator (104) for continuous further processing by said system's devices and subsystems.

4. A system according to any one of Claims 1 to 3, wherein said at least one separator (104) comprises:
a liquid-holding receptacle (130) with an open top for receiving the waste and a bottom end formed with a sink portion (134) for receiving articles with a specific gravity larger than that of water;
a first conveyor (136) with its bottom end within said sink portion (134) and its top end extending out of the receptacle to convey said second waste material (138) from said sink portion to a first collecting device (140) outside said receptacle, and a second conveyor (144) with its bottom end at another portion of the receptacle being at a level higher than that of said sink portion (134) to convey said first waste material (176) to a second collecting device (179);
a barrier-defining member (150) situated above said first conveyor (136) at a clearance therefrom permitting delivery of said first waste material (176) by said first conveyor (136) and defining a barrier for articles introduced into the receptacle (130) from directly contacting said first conveyor (136) but through said sink portion (134);
liquid injection nozzles (154) disposed within said receptacle (230) for injection of liquid streams into the liquid within the receptacle (130) to impart lateral movement onto articles within said liquid.

5. A system according to any one of Claims 1 to 3, wherein said separator (104) comprises a shredding device (155) for shredding solid matter dispersed within said liquid.

6. A system according to any one of Claims 1 to 3 comprising:
a sorter subsystem (122) for receiving said second waste material (138) and for sorting it according to predefined characteristics.

7. A system according to Claim 6, wherein said sorter subsystem (122) is connected to at least one of said liquid feed lines (172) for rinsing the sorted waste material.

8. A system according to any one of the preceding Claims, comprising:
one or more devices (179) for receiving said first waste material and for treating it by grinding, shredding or both and feeding the treated product into said crusher (106).

9. A system according to any one of the preceding Claims, wherein said crusher (106) comprises:
a tubular body (194) defining a flow path between a liquid inlet (196)and a liquid outlet (198), the tubular body having a plurality of straight sections, two adjacent sections, consisting of a proximal section being the one more proximal to the inlet and a distal section, being connected to one another at corners (200) with an angle between them; and
high pressure liquid nozzles (202) disposed within the tubular body (194) at corners (200) thereof and arranged such that they inject an axial jet (210) of pressurized liquid into the distal section, said first waste material (196) being crushed as it is propelled through the tubular body by said jets (210).

10. A system according to Claim 9, wherein said nozzles (202) are connected and receive high liquid pressure from a high pressure pump (310) pumping liquid from a filtered liquid reservoir (296) containing liquid separated in a filtration and separation subsystem (108).

11. A system according to any one of the preceding Claims, comprising:
a filtration and separation subsystem (108) for separating particulate material with a particle size above a predefined size from the liquid;
a feed line (304) for feeding the separated particulate material back into said crusher; and
a feed line (320) for feeding the liquid to the acetogenic fermentor.

12. A system according to any one of the preceding Claims, wherein filtration and separation subsystem (108) comprises:
- a first, filtration and separation device (222), for receiving said liquid product, filtering out therefrom particulate material of a size above a predefined size and for separating a sediment-containing fraction from the filtered liquid, to obtain a first filtered liquid;
- a second, separation device (224) for receiving said sediment-containing fraction, separating between the sediment and the liquid to obtain a second filtered liquid; and
- a third, filtration device (226) for receiving said first and second filtered liquid, filtering out particulate material therefrom of a size larger of the predefined size, to form a filtered liquid reservoir and a particulate material-containing fraction.

13. A system according to Claim 12, comprising a feed line for feeding (304) said particulate material-containing fraction back into said crusher.

14. A system according to any one of the preceding Claims, comprising:
a feed line for feeding (340) fermented liquid from the acetogenic fermentor (326) into the methanogenic fermentor (328) which comprises a filter (342) for filtering out particulate material of a size above a predefined size, said filter being connected to said filtration and separation subsystems (108) for feeding the filtered out material thereto.

15. A system according to Claim 14, wherein said feed line (340) is linked to one or more additive sources (332) for supplementing said first fermented effluent fed into the methanogenic fermentor (328) with said additives, to produce a second fermented effluent.

16. A system according to Claim 14 or 15, wherein the effluent fed into the methanogenic fermentor (328) is heated.

17. A system according to Claim 16, wherein the heat is provided by a generator (350) generating energy from the combusting methane produced by the methanogenic fermentor (328).

18. A system according to any one of the preceding Claims comprising one or more aerobic fermentors (334) for final fermentation treatment of said second fermented effluent from the one or more methanogenic fermentors (328).

## Patentansprüche

1. System (100) zur Behandlung von unsortierten, gesammelten Abfall, enthaltend
einen Abfallauffiahmeschacht (102);
wenigstens einen ersten Separator (104), um zwischen dem empfangenen ersten Abfallmaterial (176), das eine Dichte aufweist, die gleich oder weniger zu der von Wasser ist, und dem zweiten Abfallmaterial (138) zu trennen, das eine Dichte über der von Wasser aufweist, und um das Abfallmaterial zu entfernen;
wenigstens einen Brecher (106), um das erste Abfallmaterial (176) aufzunehmen, um wenigstens einen Partikelanteil davon im Wesentlichen zu einer kleineren Partikelform zu brechen, um behandeltes Abfallmaterial zu erhalten, und ein flüssiges Produkt herzustellen, das Wasser umfasst, das das behandelte Abfallmaterial mitführt;
wenigstens einen acetogenen Fermenter (326), um das flüssige Produkt aufzunehmen und für dessen anaerobe, acetogene Fermentation, um einen ersten fermentierten Ausfluss herzustellen;
wenigstens einen methanogenen Fermenter (328), um den ersten fermentierten Ausfluss aufzunehmen und für dessen anaerobe methanogene Fermentation, um einen zweiten fermentierten Ausfluss herzustellen; **dadurch gekennzeichnet, dass**
das System wenigstens eine Flüssigkeitzuführleitung (174) enthält, um wenigstens einen des ersten oder zweiten Ausflusses zu einer oder mehreren Vorrichtungen oder Untersystemen des Systems zuzuführen, die wenigstens einen des ersten Separators (104) und des Brechers (106) umfassen, wobei der durch die Flüssigkeitszurührleitung zugeführte Ausfluss alle benötigte wässerige Flüssigkeit für eine oder mehrere Vorrichtungen oder Untersysteme des Systems bereitstellt; und wobei das erste (176) und das zweite (133) Abfallmaterial kontinuierlich getrennt und aus dem ersten Separator (104) für eine kontinuierliche Weiterverarbeitung durch die Vorrichtungen und Untersysteme des Systems entfernt wird.

2. System gemäß Anspruch 1, bei dem wenigstens eine Flüssigkeitszuführleitung (172) zum Zuführen von wenigstens einem des ersten oder des zweiten Ausflusses zu dem ersten Separator (104) und dem Brecher (106) ist, wobei der durch die Flüssigkeitszurührleitung zugeführte Ausfluss alle benötigte wässerige Flüssigkeit für den Separator (104) und den Brecher (106) bereitstellt; und wobei das erste (176) und das zweite (138) Abfallmaterial kontinuierlich getrennt und aus dem ersten Separator (104) für eine kontinuierliche Weiterverarbeitung durch den Brecher (106) entfernt wird.

3. System gemäß Anspruch 1, bei dem wenigstens eine Flüssigkeitszuführleitung (174) zum Zuführen von wenigstens einem des ersten oder des zweiten Ausflusses zu all den Vorrichtungen und Untersystemen des Systems ist, und wobei das erste (176) und das zweite (138) Abfallmaterial kontinuierlich getrennt und aus dem ersten Separator (104) für eine kontinuierliche Weiterverarbeitung durch die Vorrichtungen und Untersysteme des Systems entfernt wird.

4. System gemäß irgendeinem der Ansprüche 1 bis 3, bei dem wenigstens ein Separator (104) umfasst:
einen Flüssigkeitsaufnahmebehälter (130) mit einem offenen oberen Ende, um den Abfall aufzunehmen und einem unteren Ende, das mit einem Senkabschnitt (134) geformt ist, um Gegenstände mit einer Dichte aufzunehmen, die größer als die von Wasser ist;
ein erstes Fördermittel (136) mit seinem unteren Ende in dem Senkabschnitt (134) und seinem oberen Ende, das sich aus dem Behälter erstreckt, um das zweite Abfallmaterial (138) aus dem Senkabschnitt (134) zu einer ersten Sammelvorrichtung (140) außerhalb des Behälters zu fördern, und ein zweites Fördermittel (144) mit seinem unterem Ende bei einem anderen Abschnitt des Behälters, der bei einem höheren Niveau als der des Senkabschnitts (134) ist, um das erste Abfallmaterial (176) zu einer zweiten Sammelvorrichtung (179) zu fördern;
ein Barriere-definierendes Element (150), das über dem ersten Fördermittel (136) an dessen Aussparung angeordnet ist, das einen Austrag des ersten Abfallmaterials (176) durch das erste Fördermittel (136) erlaubt und eine Barriere für in den Behälter (130) eingeführte Gegenstände gegen direkten Kontakt mit dem ersten Fördermittel (136) als durch den Senkabschnitt (134) definieren;
Flüssigkeitseinspritzdüsen (154), die in dem Behälter (230) zum Einspritzen von Flüssigkeitsströmen in die Flüssigkeit in dem Behälter (130) angeordnet sind, um eine seitliche Bewegung auf die Gegenstände in der Flüssigkeit zu erteilen.

5. System gemäß irgendeinem der Ansprüche 1 bis 3, bei dem der Separator (104) eine Zerkleinerungsvorrichtung (155) zum Zerkleinern von in der Flüssigkeit verteilten festen Stoffen umfasst.

6. System gemäß irgendeinem der Ansprüche 1 bis 3, enthaltend:
ein Sortier-Untersystem (122), um das zweite Abfallmaterial (138) aufzunehmen und um es gemäß vordefinierten Merkmalen zu sortieren.

7. System gemäß Anspruch 6, bei dem das Sortier-Untersystem (122) mit wenigstens einer der Flüssigkeitszuführleitungen (172) zum Spülen des sortierten Abfallmaterials verbunden ist.

8. System gemäß irgendeinem der vorangehenden Ansprüche, enthaltend:
ein oder mehrere Vorrichtungen (179), um das erste Abfallmaterial aufzunehmen und um es durch Mahlen, Zerkleinern oder beidem zu behandeln und das behandelte Produkt in den Brecher (106) zu führen.

9. System gemäß irgendeinem der vorangehenden Ansprüche, bei dem der Brecher (106) enthält:
einen rohrförmigen Körper (194), der einen Durchflussweg zwischen einem Flüssigkeitseinlass (196) und einem Flüssigkeitsauslass (198) definiert, wobei der rohrförmige Körper eine Vielzahl von geraden Abschnitten aufweist, wobei zwei benachbarte Abschnitte, die aus einem proximalen Abschnitt bestehen, der der eine ist, der proximaler zu dem Einlass ist, und einem distalen Abschnitt bestehen, die bei Ecken (200) mit einem Winkel zwischen ihnen miteinander verbunden sind; und
Hochdruck-Flüssigkeitsdüsen (202), die in dem rohrförmigen Körper (194) bei dessen Ecken (200) angebracht sind und derart angeordnet sind, dass sie einen axialen Strahl (210) von unter inneren Überdruck gesetzter Flüssigkeit in den distalen Abschnitt einspritzen, wobei das erste Abfallmaterial (196) gebrochen wird, wenn es durch die Strahlen (210) durch den rohrförmigen Körper getrieben wird.

10. System gemäß Anspruch 9, bei dem die Düsen (202) verbunden sind und Hochdruck-Flüssigkeit von einer Hochdruckpumpe (310) aufnehmen, die die Flüssigkeit aus einem gefilterten Flüssigkeitsreservoir (296) pumpt, das in einem Filtrations- und Trenn-Untersystem separierte bzw. getrennte Flüssigkeit enthält.

11. System gemäß irgendeinem der vorangehenden Ansprüche, enthaltend:
ein Filtrations- und Trenn-Untersystem (108) zum Trennen von Partikelmaterial mit einer Partikelgröße über eine vordefinierte Größe aus der Flüssigkeit;
eine Zuführleitung (304), um das getrennte Partikelmaterial in den Brecher zurück zu führen; und
eine Zuführleitung (320), um die Flüssigkeit zu dem acetogenen Fermentor zuzuführen.

12. System gemäß irgendeinem der vorangehenden Ansprüche, bei dem das Filtrations- und Trenn-Untersystem (108) enthält:
- eine erste Filtrations- und Trennvorrichtung (222), um das flüssige Produkt aufzunehmen, um Partikelmaterial mit einer Größe über einer vordefinierten Größe herauszufiltrieren und um eine Sediment-haltige Fraktion von der filtrierten Flüssigkeit zu trennen, um eine erste filtrierte Flüssigkeit zu erhalten;
- eine zweite Trennvorrichtung (224), um die Sediment-haltige Fraktion aufzunehmen, zwischen dem Sediment und der Flüssigkeit zu trennen, um eine zweite filtrierte Flüssigkeit zu erhalten; und
- eine dritte Filtrationsvorrichtung (226), um die erste und zweite filtrierte Flüssigkeit aufzunehmen, Partikelmaterial mit einer größeren Größe als die vorbestimmte Größe davon heraus zu filtrieren, um ein filtriertes Flüssigkeitsreservoir und eine Partikelmaterial-haltige Fraktion zu bilden.

13. System gemäß Anspruch 12, das eine Zuführleitung (304) enthält, um die Partikelmaterial-haltige Fraktion zu dem Brecher zurück zu führen.

14. System gemäß irgendeinem der vorangehenden Ansprüche, enthaltend:
eine Zuführleitung (340), um fermentierte Flüssigkeit von dem acetogenen Fermentor (326) zu dem methanogenen Fermentor (328) zuzuführen, der einen Filter (342) enthält, um Partikelmaterial einer Größe über einer vordefinierten Größe heraus zu filtrieren, wobei der Filter mit den Filtration- und Trenn-Untersystemen (108) verbunden ist, um das herausfiltrierte Material dahin zuzuführen.

15. System gemäß Anspruch 14, bei dem die Zuführleitung (340) mit einer oder mehreren zusätzlichen Quellen (332) verbunden ist, um den erste, in den methanogenen Fermentor (328) zugeführten, fermentierten Ausfluss mit den Zusätzen zu ergänzen, um einen zweiten fermentierten Ausfluss herzustellen.

16. System gemäß Anspruch 14 oder 15, bei dem der in den methanogenen Fermentor (328) zugeführte Ausfluss erwärmt wird.

17. System gemäß Anspruch 16, bei dem die Wärme durch einen Generator (350) bereitgestellt wird, der Energie aus dem verbrennenden Methan erzeugt, das durch den methanogenen Fermentor (328) hergestellt wird.

18. System gemäß irgendeinem der vorangehenden Ansprüche, das ein oder mehrere aerobe Fermentoren (334) zur End-Fermentationsbehandlung des zweiten fermentierten Ausflusses aus dem einen oder mehreren methanogenen Fermentoren (328) enthält.

## Revendications

1. Système (100) destiné au traitement de déchets collectés et non triés, comprenant :
une fosse réceptrice de déchets (102) ;
au moins un premier séparateur (104), prévu pour une séparation, parmi les déchets reçus, entre des premiers déchets (176), ayant une densité égale ou inférieure à celle de l'eau, et des deuxièmes déchets (138) ayant une densité supérieure à celle de l'eau, et enlèvement des déchets ;
au moins un broyeur (106) prévu pour recevoir lesdits premiers déchets (176), pour sensiblement broyer au moins une partie particulaire de ceux-ci en une plus petite forme particulaire, afin d'obtenir des déchets traités et de produire un produit liquide, comprenant de l'eau entraînant les déchets traités ;
au moins un fermenteur acétogène (326), prévu pour recevoir ledit produit liquide et pour procéder à une fermentation acétogène anaérobie de celui-ci, pour produire un premier effluent fermenté ;
au moins un fermenteur méthanogène (328), prévu pour recevoir ledit premier effluent fermenté et pour procéder à une fermentation méthanogène anaérobie de celui-ci, pour produire un deuxième effluent fermenté ; **caractérisé en ce que**
le système comprend au moins une conduite d'alimentation en liquide (174), pour acheminer au moins l'un dudit premier ou dudit deuxième effluent jusque dans un ou plusieurs des dispositifs ou sous-systèmes du système, comprenant au moins l'un dudit premier séparateur (104) et dudit broyeur (106), l'effluent acheminé par l'intermédiaire de la conduite d'alimentation en liquide fournissant tout le liquide aqueux nécessaire pour ledit ou lesdits dispositifs ou sous-systèmes du système ; et dans lequel lesdits premiers déchets (176) et lesdits deuxièmes déchets (133) sont séparés et retirés en continu du premier séparateur (104) pour une poursuite en continu du traitement par les dispositifs ou sous-systèmes du système.

2. Système selon la revendication 1, dans lequel au moins une conduite d'alimentation en liquide (172) sert à acheminer au moins l'un dudit premier ou dudit deuxième effluent jusque dans ledit premier séparateur (104) et ledit broyeur (106), l'effluent acheminé par l'intermédiaire de la conduite d'alimentation en liquide fournissant tout le liquide aqueux nécessaire pour ledit premier séparateur (104) et ledit broyeur (106), et dans lequel lesdits premiers déchets (176) et lesdits deuxièmes déchets (138) sont séparés et retirés en continu du premier séparateur (104) pour une poursuite en continu du traitement par ledit broyeur (106).

3. Système selon la revendication 1, dans lequel ladite au moins une conduite d'alimentation en liquide (174) sert à acheminer au moins l'un dudit premier ou dudit deuxième effluent jusque dans tous les dispositifs ou sous-systèmes du système, et dans lequel lesdits premiers déchets (176) et lesdits deuxièmes déchets (138) sont séparés et retirés en continu du premier séparateur (104) pour une poursuite en continu du traitement par lesdits dispositifs ou sous-systèmes du système.

4. Système selon l'une quelconque des revendications 1 à 3, dans lequel ledit au moins un séparateur (104) comprend :
un récipient contenant du liquide (130), présentant un haut ouvert pour recevoir les déchets, et une extrémité de fond dans laquelle est formée une partie formant bac (134) pour recevoir des articles ayant une densité plus élevée que celle de l'eau ;
un premier convoyeur (136) dont l'extrémité inférieure est située à l'intérieur de ladite partie formant bac (134), et dont l'extrémité supérieure s'étend hors du récipient pour acheminer lesdits deuxièmes déchets (138) depuis ladite partie formant bac jusqu'à un premier dispositif collecteur (140) à l'extérieur dudit récipient, et un deuxième convoyeur (144) dont l'extrémité inférieure est située au niveau d'une autre partie du récipient, qui est à un niveau plus élevé que celui de ladite partie formant bac (134), pour acheminer lesdits premiers déchets (176) jusqu'à un deuxième dispositif collecteur (179) ;
un élément définissant un barrage (150), situé au-dessus dudit premier convoyeur (136) à une certaine distance de celui-ci, permettant le débit desdits premiers déchets (176) par ledit premier convoyeur (136) et définissant un barrage pour que des articles, introduits dans le récipient (130), ne puissent pas venir directement en contact avec ledit premier convoyeur (136), mais uniquement par l'intermédiaire de ladite partie formant bac (134) ;
des buses d'injection de liquide (154), disposées à l'intérieur dudit récipient (230) pour injecter des jets de liquide dans le liquide présent dans le récipient (130), afin de communiquer un mouvement latéral à des articles à l'intérieur dudit liquide.

5. Système selon l'une quelconque des revendications 1 à 3, dans lequel ledit séparateur (104) comprend un dispositif de déchiquetage (155) afin de réduire en morceaux des matières solides, dispersées dans ledit liquide.

6. Système selon l'une quelconque des revendications 1 à 3, comprenant :
un sous-système de tri (122), prévu pour recevoir lesdits deuxièmes déchets (138) et pour les trier en fonction de caractéristiques prédéfinies.

7. Système selon la revendication 6, dans lequel ledit sous-système de tri (122) est relié à au moins l'une desdites conduites d'alimentation en liquide (172), pour le lavage des déchets triés.

8. Système selon l'une quelconque des revendications précédentes, comprenant un ou plusieurs dispositifs (179), prévus pour recevoir lesdits premiers déchets et pour les traiter par broiement, déchiquetage ou les deux, et pour acheminer le produit traité vers ledit broyeur (106).

9. Système selon l'une quelconque des revendications précédentes, dans lequel ledit broyeur (106) comprend :
un corps tubulaire (194), définissant un chemin d'écoulement entre une arrivée de liquide (196) et une sortie de liquide (198), le corps tubulaire présentant une pluralité de parties droites, deux parties adjacentes, consistant en une partie proximale, qui est celle qui est la plus proche de l'arrivée de liquide, et en une partie distale, ces parties étant reliées entre elles au niveau de coins (200) en formant un angle entre elles ; et
des buses pour liquide à haute pression (202), disposées à l'intérieur du corps tubulaire (194) au niveau de coins (200) de celui-ci, et prévues de telle sorte qu'elles injectent un jet axial (210) de liquide sous pression vers l'intérieur de la partie distale, lesdits premiers déchets (196) étant broyés lorsqu'ils sont propulsés à travers le corps tubulaire, par lesdits jets (210).

10. Système selon la revendication 9, dans lequel lesdites buses (202) sont reliées à une pompe haute pression (310) et reçoivent du liquide à haute pression de celle-ci, qui pompe du liquide dans un réservoir de liquide filtré (296), contenant du liquide, séparé dans un sous-système de filtration et de séparation (108).

11. Système selon l'une quelconque des revendications précédentes, comprenant :
un sous-système de filtration et de séparation (108), pour séparer, du liquide, des matières particulaires ayant une taille des particules supérieure à une taille prédéfinie ;
une conduite d'alimentation (304) pour réinjecter, dans ledit broyeur, les matières particulaires séparées ; et
une conduite d'alimentation (320) pour acheminer le liquide vers le fermenteur acétogène.

12. Système selon l'une quelconque des revendications précédentes, dans lequel le sous-système de filtration et de séparation (108) comprend :
- un premier dispositif pour une filtration et une séparation (222), pour recevoir ledit produit liquide, pour en extraire, par filtration, les matières particulaires d'une taille supérieure à une taille prédéfinie, et pour séparer, du liquide filtré, une fraction contenant des sédiments, afin d'obtenir un premier liquide filtré ;
- un deuxième dispositif pour une séparation (224), pour ladite fraction contenant des sédiments, et pour procéder à une séparation entre les sédiments et le liquide, afin d'obtenir un deuxième liquide filtré ; et
- un troisième dispositif pour une filtration (226), pour recevoir lesdits premier et deuxième liquidés filtrés, pour en extraire, par filtration, les matières particulaires d'une taille supérieure à la taille prédéfinie, afin de constituer une réserve de liquide filtré et une fraction contenant des matières particulaires.

13. Système selon la revendication 12, comprenant une conduite d'alimentation (304) pour renvoyer, dans ledit broyeur, ladite fraction contenant des matières particulaires.

14. Système selon l'une quelconque des revendications précédentes, comprenant :
une conduite d'alimentation (340) pour acheminer du liquide fermenté provenant du fermenteur acétogène (326) jusque dans le fermenteur méthanogène (328), et comprenant un filtre (342) pour extraire, par filtration, les matières particulaires d'une taille supérieure à une taille prédéfinie, ledit filtre étant relié auxdits sous-systèmes de filtration et de séparation (108) afin de leur fournir les matières extraites par filtration.

15. Système selon la revendication 14, dans lequel ladite conduite d'alimentation (340) est reliée à une ou plusieurs sources d'additifs (332) afin de compléter ledit premier effluent fermenté, fourni au fermenteur (328), avec lesdits additifs pour produire un deuxième effluent fermenté.

16. Système selon la revendication 14 ou 15, dans lequel l'effluent acheminé vers le fermenteur méthanogène (328) est chauffé.

17. Système selon la revendication 16, dans lequel la chaleur est fournie par un générateur (350), qui produit de l'énergie à partir du méthane combustible produit par le fermenteur méthanogène (328).

18. Système selon l'une quelconque des revendications précédentes, comprenant un ou plusieurs fermenteurs aérobies (334) pour le traitement de fermentation finale dudit deuxième effluent fermenté, provenant d'un ou de plusieurs fermenteurs méthanogènes (328).
